# EUROPEAN PATENT SPECIFICATION

(11) **EP 1 777 105 B1**
(45) Date of publication and mention of the grant of the patent: **02.04.2008**
(21) Application number: 05022914.5
(22) Date of filing: 20.10.2005
(51) Int. Cl.: B60Q 1/32

(54) **A vehicle with a running board**
Kraftfahrzeug mit Trittbrett
Véhicule avec marche-pied

(43) Date of publication of application: 25.04.2007
(73) Proprietor: Held, Alfred, 85764 Oberschleissheim (DE); Kiermeier, Heinz, 85764 Oberschleissheim (DE)
(72) Inventor: Held, Alfred, 85764 Oberschleissheim (DE); Kiermeier, Heinz, 85764 Oberschleissheim (DE)
(74) Representative: Jones Day

(56) References cited:
- DE-A1- 4 421 942
- DE-A1- 10 315 251
- DE-U1-0202004 002 99
- US-A1- 2002 003 696
- US-A1- 2002 172 054
- US-A1- 2004 128 882
- US-B1- 6 260 988
- US-B1- 6 354 723

## Description

The present invention relates to a vehicle with a running board in which a luminous means connectable with the vehicle electric system is arranged. A Similar running board is known from US 2002003696.

Illuminable running boards are well known. These running boards have additional top sections and are illuminated by means of fluorescent lamps or with the aid of light-emitting diodes (LEDs) and are mounted on top of the original running board (http://cgi-ebay.de/UNIVERSAL-TNT-Trittbretter). The energy supply is provided via the vehicle electric system, wherein each running board is connected to the vehicle electric system via an inverter.

These mountable running boards are determined in their form by the existing running boards. Moreover, these running boards have a greater thickness as compared with normal running boards, which is due to the height of the fluorescent lamps or LEDs used as a luminous means.

An illuminable field and an illuminable component are also known from the state of the art, used in vehicles in door sills or as door sills of vehicles.

For example, DE 44 21 942 A1 describes an illuminable field in a wall portion of a vehicle, wherein the wall portion has openings which form the illuminable field in the form of an inscription, a symbol or the like. For illuminating the openings a luminous foil is mounted on a hidden side of the wall portion. Between the wall portion and the luminous foil, a glass-like intermediate portion is mounted which extends into the openings of the wall portion. The luminous foil is connected to the vehicle electric system via a converter. The wall portion of a door sill of a vehicle of unpainted stainless steel is particularly preferred.

DE 103 20 467 A1 has as a generic basis DE 44 21 942 A1 and describes an illuminable component forming inscriptions, symbols, characters and the like, wherein the illumination is achieved by means of a luminous foil. The luminous foil is arranged on a carrier and covered by surface or inlay sections forming the illuminable inscriptions, symbols, characters etc. The surface and inlay sections are preferably of the same material as the surrounding wall portion. Transparent intermediate portions are arranged between the luminous foil and the surface and inlay sections and extend into the openings of the surface or inlay sections and extend beyond the surfaces of these sections. Preferably the components of the application DE 103 20 467 A1 serve as door sills for vehicles.

The illuminable field or the illuminable component is either formed directly of a wall portion of a vehicle or is in direct contact with it. If for example the symbol, the writing or the like is to be changed, entire wall portions or surface or inlay sections of the vehicle need to be exchanged.

The illuminable field or the illuminable component is of materials with a smooth surface, such as metal and/or plastic, in order to ensure easy cleaning of the door sill.

In contrast to a door sill which is covered, for example, by the door of a vehicle, the running board of a vehicle is usually directly exposed to weather conditions.

A running board acts, for example, as an access aid with three or four-wheel vehicles or for placing or securing the feet with bicycles during driving. In all embodiments it is important for the running board to ensure good grip also in wet weather and to prevent the foot from slipping off. The door sills described in the state of the art of materials having a smooth surface are unsuitable for this purpose.

It is therefore an object of the present invention to provide a vehicle with a running board in such a way that the running board is illuminable, its illuminable portion can be made with a variable form and by simple means and ensures secure gripping with the foot.

This object is achieved according to the present invention by a vehicle with a running board having the features according to claim 1 and by a running board having the features according to claim 10. Advantageous embodiments of the invention are defined in the dependent claims.

The vehicle with a running board according to the present invention is characterized in that the running board has an anti-slip surface and is illuminable, and its illuminable field has a variable size, in particular has a variable form. The carrier is of a metallic, non-metallic, organic or synthetic material, wherein at least the surface is of an anti-slip material such as rubber or plastic material.

The carrier has one or more recesses in which the luminous means is arranged. The luminous means can be any suitable luminous means having a small height, such as luminous foil or liquid crystal luminous means like flexible LCDs, or flexible low temperature polysilicon TFT LCDs, or organic molecules and polymers. The luminous means emits white or colored light having one or various wavelengths.

A cover is arranged on the luminous means which is transparent or non-transparent. Transparent covers completely or partially cover the luminous means and are for example of transparent plastic material.

Preferably non-transparent covers only partially cover the luminous means, i.e. they have openings by means of which at least an illuminable field with characters, numbers, figures, symbols or the like is created. The characters, numbers etc. are formed by the cover or the luminous means. Non-transparent covers are preferably of metal. Particularly preferred are such covers made of rubber or plastic.

The cover is also in the recess of the running board, wherein the cover has a height or thickness so that its surface is below or no more than flush with the surface of the running board. The cover is insertable in conformance with the recess or extends within a recess of the carrier.

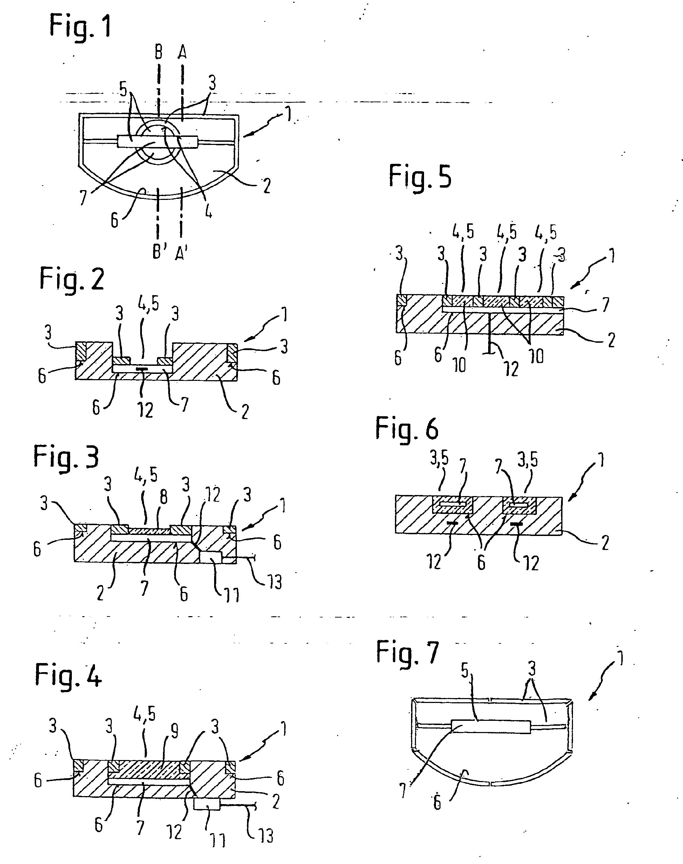

The recess or recesses of the carrier have the same depth in all areas or preferably have different depths. The cover which is arranged in the recess or recesses has the same thickness in all areas, or preferably has different thicknesses depending on the recess in the carrier. Alternatively, the cover has the same height in all areas or preferably has varying heights depending on the recess of the carrier, as shown in Fig. 2.

The cover is of one piece, or preferably of several pieces, which are fixedly connected to each other, such as by welding, or alternatively is of a plurality of parts which are inserted in the recess or recesses in the carrier, as shown in Fig. 7.

The cover is preferably not only arranged on a luminous means, but also directly in the recess of the carrier and/or surrounds a luminous means.

The cover is preferably attached in the recess of the carrier or in the area of its surface by all conceivable means, such as by well known chemical and/or positive attachment means, such as adhesives or clip fasteners. The luminous means is also attached in the recess of the carrier by one of these attachment means.

The inscription, the symbol or the like is formed by the cover. Inscriptions, synbols or the like formed by the lumions foil are already described in prior art. The cover is neither a wall portion of the vehicle nor connected to a wall portion of the vehicle. This means that the cover can be freely detached from the carrier, and the form can be easily varied without regard to spatial preconditions of a wall portion. It is thus easily exchangeable without the entire running board or even entire vehicle sections having to be exchanged.

Luminous means have different ruggedness and resistance, for example, with respect to the mechanical stresses, water or dirt. In order to protect the luminous means, a protective cover or protective film is preferably inserted between the luminous foil and the cover.

The protective cover or film is formed, for example, of plastic, preferably transparent plastic. Preferably it is either clear of tinted. A protective cover or film extends preferably over the entire area of the luminous means or only in the areas of the openings in a cover. Moreover, the protective cover extends preferably into one or more openings of the cover. It is particularly preferred that the protective cover or protective film is flush with the surface of the running board.

Alternatively one or more openings in the cover are filled with light transmitting material, such as synthetic resin, in order to protect the luminous means against external influences.

Moreover the anti-slip material such as rubber or plastic is preferably resilient. The cover will preferably be connected to the carrier in such a way that a sealing effect is achieved by the resilience if the cover is attached to the carrier with the application of pressure. This sealing effect of the anti-slip material affords additional or alternative protection of the luminous means against moisture and/or dirt.

The energy supply of the luminous means is by means of a vehicle electric system or an external energy source. For this purpose the luminous means has one or more connectors enabling a connection to the energy source. The connector(s) is/are directly on the luminous means or spaced from the luminous means. The connector(s) is/are preferably in the recess of the carrier in a channel within the carrier or extend through the upper or lower surface or a side wall of the carrier.

The connector(s) is/are connectable with a voltage transformer, wherein the voltage transformer is mounted on or in the running board. The voltage transformer is a converter or an inverter. The use of a voltage transformer is necessary if the voltage of the vehicle electric system does not match the voltage required by the luminous means. If the voltages match, a voltage transformer is not necessary.

The running board according to the present invention is foldable or non-foldable, so that it is either mounted in a fixed position on the vehicle or is moveable by means of a folding mechanism, such as hinges, for example, from the normal position into a parking position.

Further applications and advantages of the present invention will be apparent from the subsequent description with reference to the accompanying drawings, in which:
Fig. 1 is a plan view of an embodiment of the running board according to the present invention;
Fig. 2 is a cross-sectional view of the running board along line A - A';
Fig. 3 is a cross-sectional view of the running board with a protective film along line A - A';
Fig. 4 is a cross-sectional view of the running board with a protective cover along line A - A';
Fig. 5 is a cross-sectional view of the running board with a light-transmitting material along line B - B';
Fig. 6 is a cross-sectional view of a running board with an embedded luminous means; and
Fig. 7 is a plan view of an embodiment having a multi-part cover.

With reference to Fig. 1, a plan view of a first embodiment of a running board 1 according to the present invention is shown as it can be mounted on a vehicle. To simplify the illustrations, the vehicle has been omitted from the figures. The running board 1 shown in Fig. 1 comprises a carrier 2 having an anti-slip surface and recesses 6, in which a luminous means 7 and/or a cover 3 is arranged. The luminous means 7 is a luminous foil. The cover 3 has openings 4 and forms an illuminable field 5. The form of the running board and the form of the cover can be varied.

Fig. 2 shows a cross-sectional view of the running board along line A - A' according to Fig. 1. The running board 1 shows a carrier 2 with an anti-slip surface, which has recesses 6 both in the outer areas and in the central area. In the outer areas, the cover 3 is arranged in the recesses 6, wherein a luminous means 7 is not present. In the central area, however, a luminous means 7 and a cover 3 are arranged in the recess, wherein the cover 3 has openings 4 to create an illuminable field 5. The surface of the cover 3 in the outer areas of the running board is flush with the surface of the carrier 2, whereas the surfaces of the covers 3 in the central area are not flush but end at about half the height of the recesses in the carrier. The connector 12 for the energy supply of the luminous foil is directly adjacent on the luminous foil and also extends within the recess of the carrier.

Fig. 3 shows another embodiment of the running board 1 in a cross-sectional view along line A - A'. Again, the anti-slip carrier has recesses 6 both in the outer areas and in the central area. The cover 3 in the outer areas is arranged directly in the recesses of the carrier, but it has a lower height than in Fig. 2. The carrier material in the central area is higher than in Fig. 2; again, a luminous means is arranged in this central recess, and an illuminable field 5 is formed by the openings 4 of the central cover 3. In the embodiment shown in Fig. 3 the surfaces of the covers are generally flush with the surfaces of the carrier. Additionally this embodiment has a protective film which covers the luminous means and is arranged in the opening of the cover.

Fig. 3 also shows a voltage transformer 11 arranged in the carrier 2 of the running board 1. The connector 12 for the energy supply of the luminous foil 7 extends through a channel in the carrier 2 and is connected to the voltage transformer 11. The connection of the voltage transformer 11 with the vehicle electric system is via a connection 13 extending through the side wall of the running board.

Fig. 4 shows another embodiment of the running board 1 and has a protective cover. Fig. 4 is another cross-sectional view along line A - A' according to Fig. 1. The anti-slip carrier has a recess in the outer area and in the central area, wherein the cover 3 is directly arranged in the recess in the outer area. In the central area the luminous foil 7 is in the recess of the carrier 2. On top of this, a glass-like protective cover 9 is arranged preventing the luminous means from being damaged and protecting it against dirt and moisture. A cover 3 having openings is arranged on the protective cover 9. The surfaces of both the cover 3 and the protective cover 9 are flush with the surface of the carrier 2. The connector 12 for the energy supply of the luminous means 7 extends through the carrier and is connected to a voltage transformer 11 arranged external of the running board. The voltage transformer 11 has a connection 13 to the vehicle electric system, which extends outside of the carrier.

Fig. 5 is a cross-sectional view along line B - B' according to Fig. 1 and shows a running board 1 having a plurality of illuminable fields 5. The carrier has a plurality of recesses 6 in which a luminous means 7 or a cover are arranged. The surface of the cover 3 is flush with the surface of the carrier 2, and the openings of the cover 4 are filled with a light-transmitting material 10. The light-transmitting material is arranged on the luminous means and its surface is also flush with the surface of the cover 3 which in turn is flush with the surface of the carrier 2. The connector 12 for the energy supply of the luminous means 7 is guided through the carrier 2 and extends below the carrier 2. The connector 12 is spaced from the luminous means and is directly connected to the vehicle electric system without the interposition of a voltage transformer 11.

Fig. 6 shows another embodiment of the present invention, wherein the cover is transparent and the luminous means is embedded in the cover. The carrier 2 has two recesses 6 in which the luminous means 7 is arranged which is surrounded by the transparent cover 3. Herein the cover has no openings 4 and forms the illuminable field 5. Each luminous means in a recess has its own connector 12, which extends through the carrier 2 and is outside of the carrier 2.

Fig. 7 is a plan view of a running board, wherein the cover 3 has a plurality of parts. The parts of the cover 3 are inserted in recesses of the carrier 6, and the central portion of the cover 3 forms an illuminable field 5. The luminous means 7 is a liquid crystal luminous means.

### List of reference numerals

- 1: running board
- 2: carrier
- 3: cover
- 4: opening in cover
- 5: illuminable field
- 6: recess in carrier
- 7: luminous means
- 8: protective film
- 9: protective cover
- 10: light-transmitting material
- 11: voltage transformer
- 12: connector for energy supply
- 13: connection between voltage transformer and vehicle electric system
- 14: vehicle electric system

## Claims

1. A vehicle with a running board (1), wherein the running board (1) comprises a carrier (2), on which a luminous means (7) is arranged, which is connected to a voltage transformer (11) in a way in which it is switchably connected to a vehicle electric system (14), wherein the luminous means (7) is a luminous foil or a liquid crystal luminous means, covered by a cover (3) which has at least one illuminable field (5) with characters, numbers, figures, symbols or the like, provided with a connector (12) connectable with said voltage transformer (11) to obtain an energy supply, **characterized in that** said carrier (2) comprises an anti-slip material at least on its surface, the luminous means (7) is arranged in a recess of the carrier (6), and the cover is insertable in the recess of the carrier (6) and is formed in such a way that its surface is no more than flush with the surface of the carrier (2).

2. The vehicle according to claim 1, **characterized in that** said cover (3) is insertable in said recess (6) in conformance with it.

3. The vehicle according to claim 1 or 2, **characterized in that** said cover (3) has openings (4).

4. The vehicle according to any one of claims 1 to 3, **characterized in that** a protective cover (9) or film (8) is arranged in the opening (4) of the cover (3), or is inserted between the luminous means (7) and the cover (3).

5. The vehicle according to any one of claims 1 to 4, **characterized in that** said protective cover (9) or film (8) extends into one or more openings (4) of said cover (3).

6. The vehicle according to any one of claims 1 to 5, **characterized in that** one or more openings (4) of said cover (3) is/are filled with a light-transmitting material (10).

7. The vehicle according to any one of claims 1 to 6, **characterized in that** said voltage transformer (11) is mounted at or in said running board (1).

8. The vehicle according to any one of claims 1 to 7, **characterized in that** said voltage transformer (11) is a converter or an inverter.

9. The vehicle according to any one of claims 1 to 8, **characterized in that** said running board (1) is foldable.

10. A running board (1) for a vehicle according to any one of claims 1 to 9, wherein a luminous means (7) is arranged on a carrier (2) which is connectable to a voltage transformer (11) in a way in which it is switchably connectable to a vehicle electric system (14), **characterized in that** said carrier (2) comprises an anti-slip material at least on its surface, the luminous means (7) is a luminous foil or a liquid crystal luminous means, is arranged in a recess of the carrier (6) and is covered by a cover (3) which has at least one illuminable field (5) with characters, numbers, figures, symbols or the like, is insertable in the recess of said carrier (6) and formed in such a way that its surface is no more than flush with the surface of said carrier (2), wherein said luminous means (7) is provided with a connector (12) connectable with said voltage transformer (11) to obtain an energy supply.

## Patentansprüche

1. Fahrzeug mit einem Trittbrett (1), wobei das Trittbrett (1) einen Träger (2) aufweist, auf dem ein Leuchtmittel angeordnet ist, das an einen Spannungstransformator (11) in einer Weise angeschlossen ist, in der es schaltbar mit einem elektrischen System (14) eines Fahrzeugs verbunden ist, wobei das Leuchtmittel (7) eine Leuchtfolie oder ein Flüssigkristallleuchtmittel ist, das von einer Abdeckung (3) abgedeckt ist, die mindestens ein leuchtbares Feld (5) mit Schriftzeichen, Zahlen, Figuren, Symbolen oder dergleichen aufweist, die mit einem Anschluss (12) ausgestattet ist, der mit dem Spannungstransformator (11) verbindbar ist, um eine Energieversorgung zu erhalten, **dadurch gekennzeichnet, dass** der Träger (2) mindestens auf seiner Oberfläche ein rutschfestes Material aufweist, das Leuchtmittel in einer Vertiefung des Trägers (6) angeordnet ist, und die Abdeckung in die Vertiefung des Trägers (6) einfügbar und in einer solchen Weise geformt ist, dass ihre Oberfläche mit der Oberfläche des Trägers (2) nicht mehr als bündig ist.

2. Fahrzeug nach Anspruch 1, **dadurch gekennzeichnet, dass** die Abdeckung (3) konform mit der Vertiefung (6) in diese einfügbar ist.

3. Fahrzeug nach Anspruch 1 oder 2, **dadurch gekennzeichnet, dass** die Abdeckung (3) Öffnungen (4) aufweist.

4. Fahrzeug nach einem der Ansprüche 1 bis 3, **dadurch gekennzeichnet, dass** eine Schutzabdeckung (9) oder ein Schutzfilm (8) in der Öffnung (4) der Abdeckung (3) angeordnet ist oder zwischen das Leuchtmittel (7) und die Abdeckung (3) eingesetzt wird.

5. Fahrzeug nach einem der Ansprüche 1 bis 4, **dadurch gekennzeichnet, dass** sich die Schutzabdeckung (9) oder der Schutzfilm (8) in eine oder mehrere Öffnungen (4) der Abdeckung (3) erstreckt.

6. Fahrzeug nach einem der Ansprüche 1 bis 5, **dadurch gekennzeichnet, dass** eine oder mehrere Öffnungen (4) der Abdeckung (3) mit einem lichtdurchlässigen Material (10) gefüllt ist bzw. sind.

7. Fahrzeug nach einem der Ansprüche 1 bis 6, **dadurch gekennzeichnet, dass** der Spannungstransformator (11) an dem Trittbrett (1) oder in ihm angeordnet ist.

8. Fahrzeug nach einem der Ansprüche 1 bis 7, **dadurch gekennzeichnet, dass** der Spannungstransformator (11) ein Gleichrichter oder ein Wechselrichter ist.

9. Fahrzeug nach einem der Ansprüche 1 bis 8, **dadurch gekennzeichnet, dass** das Trittbrett (1) klappbar ist.

10. Trittbrett (1) für ein Fahrzeug nach einem der Ansprüche 1 bis 9, wobei ein Leuchtmittel (7) auf einem Träger (2) angeordnet ist, das mit einem Spannungstransformator (11) in einer Weise verbindbar ist, in der es mit einem elektrischen System (14) eines Fahrzeugs schaltbar verbindbar ist, **dadurch gekennzeichnet, dass** der Träger (2) mindestens auf seiner Oberfläche ein rutschfestes Material aufweist, das Leuchtmittel (7) eine Leuchtfolie oder ein Flüssigkristallleuchtmittel ist, in einer Vertiefung des Trägers (6) angeordnet und durch eine Abdeckung abgedeckt ist, die mindestens ein beleuchtbares Feld mit Schriftzeichen, Zahlen, Figuren, Symbolen oder dergleichen hat, in die Vertiefung des Trägers (6) einfügbar und in einer solchen Weise geformt ist, dass ihre Oberfläche mit der Oberfläche des Trägers (2) nicht mehr als bündig ist, wobei das Leuchtmittel (7) mit einem Anschluss (12) ausgestattet ist, der mit dem Spannungstransformator (11) verbindbar ist, um eine Energieversorgung zu erhalten.

## Revendications

1. Véhicule avec un marchepied (1), dans lequel le marchepied (1) comprend un support (2), sur lequel des moyens lumineux (7) sont agencés, qui sont connectés à un transformateur de tension (11) d'une façon par laquelle il est connecté de manière commutable à une installation électrique du véhicule (14), dans lequel les moyens lumineux (7) sont une feuille lumineuse ou des moyens lumineux à cristaux liquides, recouverts par un couvercle (3) qui présente au moins un champ pouvant être illuminé (5) doté de caractères, de numéros, de chiffres, de symboles ou similaire, pourvu d'un connecteur (12) pouvant être connecté audit transformateur de tension (11) pour obtenir une alimentation en énergie, **caractérisé en ce que** ledit support (2) comprend un matériau anti-glissement au moins sur sa surface, les moyens lumineux (7) sont agencés dans un évidement du support (6), et le couvercle peut être inséré dans l'évidement du support (6) et est formé de telle façon que sa surface n'est plus alignée sur la surface du support (2).

2. Véhicule selon la revendication 1, **caractérisé en ce que** ledit couvercle (3) peut être inséré dans ledit évidement (6) conformément à celui-ci.

3. Véhicule selon la revendication 1 ou 2, **caractérisé en ce que** ledit couvercle (3) présente des ouvertures (4).

4. Véhicule selon l'une quelconque des revendications 1 à 3, **caractérisé en ce qu'**un couvercle protecteur (9) ou un film (8) est agencé dans l'ouverture (4) du couvercle (3), ou est inséré entre les moyens lumineux (7) et le couvercle (3).

5. Véhicule selon l'une quelconque des revendications 1 à 4, **caractérisé en ce que** ledit couvercle protecteur (9) ou le film (8) s'étend à l'intérieur d'une ou des ouvertures (4) dudit couvercle (3).

6. Véhicule selon l'une quelconque des revendications 1 à 5, **caractérisé en ce qu'**une ou plusieurs ouvertures (4) dudit couvercle (3) est/sont remplie(s) d'un matériau transmettant la lumière (10).

7. Véhicule selon l'une quelconque des revendications 1 à 6, **caractérisé en ce que** ledit transformateur de tension (11) est monté au niveau dudit ou dans ledit marchepied (1).

8. Véhicule selon l'une quelconque des revendications 1 à 7, **caractérisé en ce que** ledit transformateur de tension (11) est un convertisseur ou un ondulateur.

9. Véhicule selon l'une quelconque des revendications 1 à 8, **caractérisé en ce que** ledit marchepied (1) est pliable.

10. Marchepied (1) pour un véhicule selon l'une quelconque des revendications 1 à 9, dans lequel des moyens lumineux (7) sont agencés sur un support (2) qui peut être connecté à un transformateur de tension (11) d'une façon par laquelle il peut être connecté de manière commutable à une installation électrique du véhicule (14), **caractérisé en ce que** ledit support (2) comprend un matériau anti-glissement au moins sur sa surface, les moyens lumineux (7) sont une feuille lumineuse ou des moyens lumineux à cristaux liquides, est agencé dans un évidement du support (6) et est recouvert par un couvercle (3) qui présente au moins un champ pouvant être illuminé (5) doté de caractères, de numéros, de chiffres, de symboles ou similaire, peut être inséré dans l'évidement dudit support (6) et formé de telle manière que sa surface n'est plus alignée sur la surface dudit support (2), dans lequel lesdits moyens lumineux (7) sont pourvus d'un connecteur (12) pouvant être connecté audit transformateur de tension (11) pour obtenir une alimentation en énergie.
